(19) Europäisches Patentamt / European Patent Office / Office européen des brevets

(11) **EP 3 647 269 B1**

(12) **EUROPEAN PATENT SPECIFICATION**

(45) Date of publication and mention of the grant of the patent:
**03.04.2024 Bulletin 2024/14**

(21) Application number: **19206384.0**

(22) Date of filing: **31.10.2019**

(51) International Patent Classification (IPC):
**$C01G\ 51/00$** (2006.01)    **$C01G\ 53/00$** (2006.01)
**$H01M\ 4/525$** (2010.01)    **$H01M\ 4/36$** (2006.01)

(52) Cooperative Patent Classification (CPC):
**$C01G\ 53/50$; $C01G\ 51/42$; $H01M\ 4/366$;**
**$H01M\ 4/525$;** $C01P\ 2004/50$; $C01P\ 2004/61$;
$C01P\ 2004/62$; $C01P\ 2004/82$; $C01P\ 2004/84$;
$Y02E\ 60/10$

(54) **POSITIVE ACTIVE MATERIAL FOR RECHARGEABLE LITHIUM BATTERY, METHOD OF PREPARING THE SAME AND RECHARGEABLE LITHIUM BATTERY INCLUDING THE SAME**

POSITIVES AKTIVMATERIAL FÜR EINE WIEDERAUFLADBARE LITHIUMBATTERIE, VERFAHREN ZUR HERSTELLUNG DAVON UND WIEDERAUFLADBARE LITHIUMBATTERIE DAMIT

MATÉRIAU ACTIF POSITIF POUR BATTERIE AU LITHIUM RECHARGEABLE, SON PROCÉDÉ DE PRÉPARATION ET BATTERIE AU LITHIUM RECHARGEABLE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2018 KR 20180133787**

(43) Date of publication of application:
**06.05.2020 Bulletin 2020/19**

(73) Proprietor: **Samsung SDI Co., Ltd.**
**Gyeonggi-do 17084 (KR)**

(72) Inventors:
• **Hong, Soonkie**
 **17084 Yongin-si, Gyeonggi-do (KR)**
• **Kim, Young-Ki**
 **17084 Yongin-si, Gyeonggi-do (KR)**
• **Park, Jungjoon**
 **17084 Yongin-si, Gyeonggi-do (KR)**
• **Lee, Soonrewl**
 **17084 Yongin-si, Gyeonggi-do (KR)**
• **Chae, Youngjoo**
 **17084 Yongin-si, Gyeonggi-do (KR)**
• **Choi, Ickkyu**
 **17084 Yongin-si, Gyeonggi-do (KR)**
• **Hong, Mingzi**
 **17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

(56) References cited:
**EP-A1- 3 249 723    EP-A1- 3 272 710**
**EP-A1- 3 291 340**

**Description**

**BACKGROUND OF THE INVENTION**

(a) Field of the Invention

A positive active material for a rechargeable lithium battery, a method of preparing the same, and a rechargeable lithium battery including the same are disclosed.

(b) Description of the Related Art

In order to meet down-sizing and high performance of various devices, rechargeable lithium batteries have become increasingly important in terms of down-sizing and weight reduction as well as high energy density. In addition, high capacity and high temperature stability of rechargeable lithium batteries, and stability at a high voltage become important to apply to electric vehicles and the like.

Various positive active materials have been investigated to realize rechargeable lithium batteries for applications to the uses.

Nickel-based lithium transition metal oxide including Ni, Co, and Mn simultaneously provides higher discharge capacity per unit weight than conventional $LiCoO_2$, but provides relatively low capacity per unit volume and discharge capacity due to low filling density. In addition, the nickel-based lithium transition metal oxide may show deteriorated safety during operation at a high voltage.

Therefore, it is required to improve the filling density and thermal stability of nickel-based lithium transition metal oxide and to increase mixture density of a positive electrode plate.

EP 3 272 710 A1 discloses a nickel-based active material, a method of preparing the same, and a lithium secondary battery including a positive electrode including the nickel-based active material. The nickel-based active material includes at least one secondary particle including an aggregate of two or more primary particles, wherein at least a portion of the secondary particle has a radial array structure, and a hetero-element compound is positioned between the primary particles.

**SUMMARY OF THE INVENTION**

An embodiment provides a positive active material having improved charge and discharge capacity, efficiency, and cycle-life.

Another embodiment provides a method of preparing the positive active material.

Another embodiment provides a rechargeable lithium battery including the positive active material.

An embodiment provides a positive active material for a rechargeable lithium battery as defined in claim 1. The positive active material includes a nickel-based lithium transition metal oxide including a secondary particle comprising an agglomeration of a plurality of primary particles. The secondary particle includes a core and a surface layer surrounding the core, and the surface layer includes primary particles and a nano-sized cobalt-based lithium transition metal oxide between the primary particles.

The secondary particle includes a small particle diameter secondary particle having an average particle diameter (D50) of 2 $\mu$m to 5 $\mu$m and a large particle diameter secondary particle having an average particle diameter of 15 $\mu$m to 20 $\mu$m.

The cobalt-based lithium transition metal oxide has an average particle diameter of less than 1 $\mu$m, preferably of 100 nm to 200 nm.

A content of the cobalt-based lithium transition metal oxide may be 5 wt% to 15 wt% based on a total weight of the positive active material.

The cobalt-based lithium transition metal oxide is a compound represented by Chemical Formula 1:

$$[\text{Chemical Formula 1}] \qquad Li_aCo_xM_{1-x}O_2$$

In Chemical Formula 1, $0.9 \leq a \leq 1.05$, $0.8 \leq x \leq 1.0$, and M is at least one metal element selected from Ni, Mn, Al, Cr, Fe, V, Mg, Ti, Zr, Nb, Mo, W, Cu, Zn, Ga, In, Sn, La, and Ce.

The surface layer may be a region corresponding to a depth of 150 nm to 200 nm from the surface of the secondary particle.

The nickel-based lithium transition metal oxide is a compound represented by Chemical Formula 2:

$$[\text{Chemical Formula 2}] \qquad Li_aNi_xCo_yM_zO_2$$

In Chemical Formula 2, $0.9 \le a \le 1.05$, $0.4 \le x \le 0.95$, $0.1 \le y \le 0.3$, $0.1 \le z \le 0.3$, $x + y + z = 1$, and M is at least one metal element selected from Mn, Al, Cr, Fe, V, Mg, Ti, Zr, Nb, Mo, W, Cu, Zn, Ga, In, Sn, La, and Ce.

A mixing ratio of the large particle diameter secondary particle and the small particle diameter secondary particle may be a weight ratio of 90 : 10 to 50 : 50.

The small particle diameter secondary particle may have a needle-shape, a sheet-shape, or a combination thereof.

The positive active material may further include a cobalt-based lithium transition metal oxide disposed on the surface layer.

Another embodiment provides a method of preparing a positive active material for a rechargeable lithium battery as defined in claim 8 which includes mixing a nickel-based transition metal hydroxide and a lithium salt to prepare a first mixture; first heat-treating the first mixture under a rapid temperature-increasing condition at 800 °C to 1000 °C to prepare a first fired product including residual lithium; and mixing the first fired product with a cobalt-based transition metal hydroxide and secondly heat-treating the same at 750 °C to 950 °C to obtain the positive active material.

The nickel-based transition metal hydroxide includes a large particle diameter secondary particle having an average particle diameter of 15 $\mu$m to 20 $\mu$m and a small particle diameter secondary particle having an average particle diameter of 2 $\mu$m to 5 $\mu$m in a weight ratio of 90 : 10 to 50 : 50.

The rapid temperature-increasing condition includes a process where a temperature is raised from 25 °C to 100 °C to a first heat-treating reaction temperature of 800 °C to 1000 °C at 4 °C/min to 6 °C/min.

The cobalt-based transition metal hydroxide may be $Co(OH)_2$.

The cobalt-based transition metal hydroxide has an average particle diameter of 100 nm to 200 nm.

The small particle diameter secondary particle may have a needle-shape, a sheet-shape, or a combination thereof.

Another embodiment provides a rechargeable lithium battery including a positive electrode including the positive active material; a negative electrode including a negative active material; and an electrolyte.

A pellet density of the positive active material powder and a mixture density of the positive electrode may be improved.

The rechargeable lithium battery may be advantageous for high temperature and high voltage by including the cobalt-based lithium transition metal oxides.

The rechargeable lithium battery may have improved high temperature cycle-life characteristics and improved charge and discharge efficiency by reducing an amount of gas generated at a high voltage.

## BRIEF DESCRIPTION OF THE DRAWINGS

FIG. 1 is an exploded perspective view of a rechargeable lithium battery according to an embodiment.

FIG. 2 is a photograph showing a distribution of cobalt (Co) elements by analyzing the cross section of the positive active material prepared in Example 1 by EDS (energy dispersive spectroscopy).

FIG. 3A is a graph showing a charge curve of the differential capacity (dQ/dV)-voltage of the rechargeable lithium battery cells according to Examples 1 and 2 and Comparative Examples 1 to 3.

FIG. 3B is an enlarged graph of FIG. 3A.

FIG. 4 is a graph showing high temperature cycle-life characteristics of half-cells manufactured in Example 1, Example 2 and Comparative Example 1 to 3.

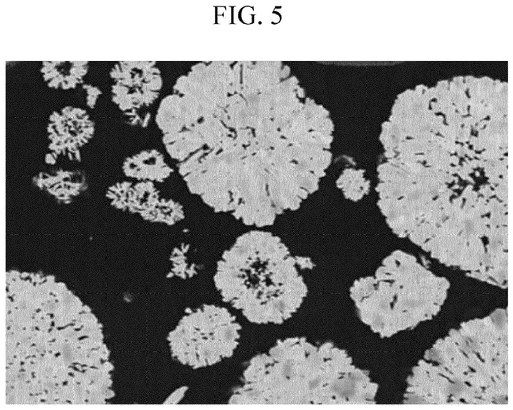

FIG. 5 is a photographic image showing the combination of large particle diameter and small particle diameter secondary particles.

## DETAILED DESCRIPTION OF THE EMBODIMENTS

Hereinafter, embodiments of the present invention are described in detail. However, these embodiments are exemplary, the present invention is not limited thereto and the present invention is defined by the scope of claims.

As used herein, when specific definition is not otherwise provided, It will be understood that when an element such as a layer, film, region, or substrate is referred to as being "on" another element, it can be directly on the other element or intervening elements may also be present.

A nickel-based lithium transition metal oxide includes a secondary particle in which a plurality of primary particles are agglomerated.

The secondary particle includes a small particle diameter secondary particle having an average particle diameter (D50) of 2 $\mu$m to 5 $\mu$m and a large particle diameter secondary particle having an average particle diameter of 15 $\mu$m to 20 $\mu$m. When the secondary particles have an average particle diameter within the range, a pellet density of a positive active material powder and a mixture density of a positive electrode may be improved, and a cobalt-based lithium transition metal oxide having in particular a nano-size average particle diameter may be well absorbed in a surface layer of the nickel-based lithium transition metal oxide secondary particle. Herein, the nano-size may mean a few nano to several hundred nanometers. For example, the size of the particles can be measured by SEM (Scanning Electron Microscope).

When the nickel-based lithium transition metal oxide is composed of a mixture of the large particle diameter secondary particle and the small particle diameter secondary particle, a mixing ratio thereof may be 90 : 10 to 50 : 50, for example 90 : 10 to 70 : 30, or 80 : 20. When the nickel-based lithium transition metal oxide secondary particles satisfy the ratio range, the pellet density of a positive active material powder and the mixture density of a positive electrode may be improved.

The secondary particle includes a core and a surface layer surrounding the core, and the surface layer includes primary particles and the nano-sized cobalt-based lithium transition metal oxide at least partly disposed between the primary particles. When the nano-sized cobalt-based lithium transition metal oxide is included among the primary particles present in the surface layer, for example, absorbed in the surface layer of the secondary particle, the pellet density of a positive active material powder and the mixture density of a positive electrode may be improved. In addition, the cobalt-based lithium transition metal oxide has advantageous characteristics with respect to a high temperature and a high voltage, a gas generation amount at the high voltage may be reduced, and accordingly, a rechargeable lithium battery having improved high temperature cycle-life characteristics and charge and discharge efficiency may be obtained.

A charge curve of differential charge capacity (dQ/dV)-voltage of the rechargeable lithium battery including the positive active material for the rechargeable lithium battery may not have a peak at a range of 3.8 V to 4.0 V. When the peak is not found within the voltage range, the nano-sized cobalt-based lithium transition metal oxide is absorbed in the surface layer of the secondary particle. Accordingly, the pellet density of the positive active material powder and the mixture density of the positive electrode may be improved, and particularly, since the cobalt-based lithium transition metal oxide has advantageous characteristics with respect to a high temperature and a high voltage, a gas generation amount at the high voltage may be reduced, and accordingly, a rechargeable lithium battery having improved high temperature cycle-life characteristics and charge and discharge efficiency may be obtained.

The surface layer may be a region corresponding to a depth of 150 nm to 200 nm from the surface of the positive active material. Herein, the surface is the outermost surface of the secondary particle.

The nano-sized cobalt-based lithium transition metal oxide is a compound represented by Chemical Formula 1.

[Chemical Formula 1] $\quad$ $Li_aCo_xM_{1-x}O_2$

In Chemical Formula 1, $0.9 \le a \le 1.05$, $0.8 \le x \le 1.0$, and M is at least one metal element selected from Ni, Mn, Al, Cr, Fe, V, Mg, Ti, Zr, Nb, Mo, W, Cu, Zn, Ga, In, Sn, La, and Ce.

In an embodiment, the nano-sized cobalt-based lithium transition metal oxide may be for example $LiCoO_2$.

The nano-sized cobalt-based lithium transition metal oxide has an average particle diameter of less than 1 $\mu$m, for example, 100 nm to 800 nm, 100 nm to 600 nm, 100 nm to 400 nm, 100 nm to 200 nm, 100 nm to 180 nm, 100 nm to 160 nm, 100 nm to 140 nm, or 100 nm to 120 nm. When the cobalt-based lithium transition metal oxide has an average particle diameter within the range, the pellet density of a positive active material powder and the mixture density of a positive electrode may be improved, and the cobalt-based lithium transition metal oxide having a nano-size average particle diameter may be well absorbed in the surface layer of the nickel-based lithium transition metal oxide secondary particle.

A content of the cobalt-based lithium transition metal oxide may be 5 wt% to 15 wt%, for example 5 wt% to 10 wt%, 5 wt% to 9 wt%, or 5 wt% to 7 wt% based on a total weight, 100 wt% of the positive active material. When the content of cobalt-based lithium transition metal oxide is in the ranges, a pellet density of the positive active material powder and a mixture density of the positive electrode may be improved.

In the positive active material, the nickel-based lithium transition metal oxide is a compound represented by Chemical Formula 2.

[Chemical Formula 2] $\quad$ $Li_aNi_xCo_yM_zO_2$

In Chemical Formula 2, $0.9 \le a \le 1.05$, $0.4 \le x \le 0.95$, $0.1 \le y \le 0.3$, $0.1 \le z \le 0.3$, x + y + z =1, and M is at least one metal element selected from Mn, Al, Cr, Fe, V, Mg, Ti, Zr, Nb, Mo, W, Cu, Zn, Ga, In, Sn, La, and Ce.

The x indicating a Ni mole ratio may be 0.4 to 0.95, for example 0.45 to 0.80, 0.45 to 0.70, 0.45 to 0.65, 0.50 to 0.60, 0.53 to 0.57. That is, Ni may be included in an amount of 40 at% to 95 at%, for example, 45 at% to 80 at%, 45 at% to 70 at%, 45 at% to 65 at%, 50 at% to 60 at%, or 53 at% to 57 at% based on a total amount, 100 at% of metals except lithium of the positive active material. Accordingly, a rechargeable lithium battery having improved charge and discharge efficiency and cycle-life characteristics may be provided.

The small particle diameter secondary particle of the nickel-based lithium transition metal oxide may have a needle-shape, a sheet-shape, or a combination thereof. When the small particle diameter secondary particle has the shape, a mixture density of the positive active material powder and a pellet density of the positive electrode may be improved.

The positive active material may include cobalt-based lithium transition metal oxide disposed on the outer surface of the secondary particle. The cobalt-based lithium transition metal oxide may form a continuous layer or be present as an island type. Such deposition of pure cobalt-based lithium transition metal oxide on the surface of the secondary particle may have a thickness in a range of 80 nm to 120 nm. Accordingly, a gas generation amount at the high voltage may be reduced, and a rechargeable lithium battery having improved high temperature cycle-life characteristics and charge and discharge efficiency may be obtained.

A method of preparing a positive active material according to another embodiment is provided. Hereinafter, the preparing method is explained in detail.

A nickel-based transition metal hydroxide and a lithium salt are mixed to prepare a first mixture; and the first mixture is first heat-treated under a rapid temperature-increasing condition at 800 °C to 1000 °C to prepare a first fired product including residual lithium.

The nickel-based transition metal hydroxide includes a large particle diameter secondary particle having an average particle diameter of 15 $\mu$m to 20 $\mu$m and a small particle diameter secondary particle having an average particle diameter of 2 $\mu$m to 5 $\mu$m in a weight ratio of 90 : 10 to 50 : 50.

In the first mixture, a mole ratio of Li/(Ni+Co+Mn) may be greater than or equal to 0.99, for example, 1.00 to 1.25. When in the mixture, the mole ratio of Li/(Ni+Co+Mn) is within the range, a large amount of lithium may remain on the surface of the nickel-based lithium transition metal oxide in the first fired product manufactured from the first heat-treating. This residual lithium may react with the cobalt-based transition metal hydroxide in the secondly heat-treating and be used to prepare a positive active material.

The rapid temperature-increasing condition includes a process where a temperature of the first mixture is raised from 25 °C to 100 °C to a first heat-treating reaction temperature of 800 °C to 1000 °C at 4 °C/min to 6 °C/min. This process may prevent cation mixing and generate a large amount of unreacted residual lithium on the surface of the nickel-based lithium transition metal oxide.

The first heat-treating may be performed at 800 °C to 1000 °C for 1 hour to 4 hours under an air atmosphere or an oxidizing gas atmosphere. Since the first heat-treating at a high temperature (800 °C to 1000 °C) under an air atmosphere or an oxidizing gas atmosphere for a short time (1 hour to 4 hours) is performed, nickel-based transition metal hydroxide not participated in a reaction may be present in a large amount. Accordingly, the large amount of unreacted residual lithium may be included on the surface of the nickel-based lithium transition metal oxide, and the cation mixing may be improved by suppressing transition of Ni into $Ni^{2+}$ and movement of the $Ni^{2+}$ to a Li site.

On the other hand, the oxidizing gas atmosphere indicates a gas atmosphere further including oxygen in the air. The oxidizing gas atmosphere may have an oxygen content of 20 volume% to 40 volume%.

The first heat-treating process may be performed by setting a charging height of greater than or equal to 5 cm, for example, ranging 5 cm to 8 cm. In this way, when the heat-treating process is performed by inserting the mixture into a heat-treatment equipment in a height of greater than or equal to 5 cm, a production is increased and thus economical relative to a production cost, and an unreacted lithium amount remaining on the surface of the first fired product is increased, and accordingly, a positive active material may be well formed in the subsequent second heat-treating process.

The first fired product is mixed with the cobalt-based transition metal hydroxide and then, secondly heat-treated at 750 °C to 950 °C.

The secondly heat-treating may be performed by increasing a temperature from a range of 25 °C to 100 °C up to a reaction temperature for the secondly heat-treating in a range of 750 °C to 950 °C at 5 °C/min to 10 °C/min, maintaining the temperature at 750°C to 950°C for 10 hours to 15 hours, and decreasing the temperature at 5 °C/min to 10 °C/min down to 25 °C to 100 °C.

The second heat-treating process may be performed under the oxygen atmosphere having an oxygen content of 40 volume% to 100 volume%.

The cobalt-based transition metal hydroxide may be $Co(OH)_2$.

The cobalt-based transition metal hydroxide has an average particle diameter of 100 nm to 200 nm.

When the cobalt-based transition metal hydroxide having an average particle diameter within the range is used, cobalt-based lithium transition metal oxide prepared during the second heat-treating process may not be simply coated on the surface of the nickel-based lithium transition metal oxide secondary particle but absorbed among primary particles in a surface layer of the secondary particle.

A content of the cobalt-based transition metal hydroxide may be adjusted so that the nano-sized cobalt-based lithium transition metal oxide is included in an amount of 5 wt% to 15 wt% based on a total weight of the positive active material.

When the content of the cobalt-based transition metal hydroxide is in the range, a pellet density of the positive active material powder and a mixture density of the positive electrode may be improved.

The lithium salt may be at least one of lithium hydroxide, lithium carbonate, lithium sulfate, and lithium nitrate.

The small particle diameter nickel-based transition metal hydroxide secondary particle may have a needle-shape, a sheet-shape, or a combination thereof. The small particle diameter nickel-based transition metal oxide secondary particle prepared by the method of preparing the positive active may maintain the needle-shape, the sheet-shape, or the combination thereof. Accordingly, a mixture density of the positive active material powder and a pellet density of the positive electrode may be improved. On the contrary, when a positive active material is prepared by separately preparing a large particle diameter nickel-based transition metal oxide secondary particle and a small particle diameter nickel-based transition metal oxide secondary particle, and heat-treating them, the small particle diameter nickel-based transition metal oxide secondary particle in a final product may have a spherical shape. In this case, the improvement effect of the above pellet density and mixture density may not be shown.

By the method of preparing the positive active material for the rechargeable lithium battery, provided is the positive active material for a rechargeable lithium battery according to the embodiment which includes a nickel-based lithium transition metal oxide including a secondary particle in which a plurality of primary particles are agglomerated, the secondary particle includes a core and a surface layer surrounding the core, and the surface layer includes a plurality of primary particles and a nano-sized cobalt-based lithium transition metal oxide between the primary particles.

Another embodiment provides a rechargeable lithium battery including a positive electrode including the positive active material; a negative electrode including a negative active material; a separator disposed between the positive electrode and the negative electrode; and an electrolyte.

The positive electrode includes a current collector and a positive active material layer formed on the current collector and including a positive active material.

In the positive active material layer, a content of the positive active material may be 90 wt% to 98 wt% based on a total weight of the positive active material layer. In addition, the positive active material layer may further include a binder and a conductive material.

Herein, each amount of the binder and the conductive material may be 1 wt% to 5 wt% based on a total weight of the positive active material layer.

The binder may include polyvinyl alcohol, carboxylmethyl cellulose, hydroxypropyl cellulose, diacetyl cellulose, polyvinyl chloride, polyvinylfluoride, polyvinylpyrrolidone, polyurethane, polytetrafluoroethylene, polyvinylidene fluoride, polyethylene, polypropylene, a styrene-butadiene rubber, an acrylated styrene butadiene rubber, an epoxy resin, nylon, and the like.

Examples of the conductive material may include a carbon-based material such as natural graphite, artificial graphite, carbon black, acetylene black, ketjen black, carbon fiber and the like; a metal-based material of a metal powder or a metal fiber including copper, nickel, aluminum, silver, and the like; a conductive polymer such as a polyphenylene derivative; or a mixture thereof.

The current collector may include an aluminum foil, a nickel foil, or a combination thereof.

The negative electrode includes a current collector and a negative active material layer formed on the current collector and including a negative active material.

The negative active material may include a material that reversibly intercalates/deintercalates lithium ions, a lithium metal, a lithium metal alloy, a material being capable of doping/dedoping lithium, or transition metal oxide.

The material that reversibly intercalates/deintercalates lithium ions may include a carbon material. The carbon material may be any generally-used carbon-based negative active material in a rechargeable lithium ion battery. Examples thereof may be crystalline carbon, amorphous carbon, or a mixture thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, SiOx ($0 < x < 2$), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), Sn, $SnO_2$, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn), and the like. At least one of these materials may be mixed with $SiO_2$. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The transition metal oxide may be vanadium oxide, lithium vanadium oxide, or lithium titanium oxide.

In the negative active material layer, the negative active material may be included in an amount of 95 wt% to 99 wt% based on the total weight of the negative active material layer.

In an embodiment of the present invention, the negative active material layer includes a binder, and optionally a conductive material. In the negative active material layer, a content of the binder may be 1 wt% to 5 wt% based on a total weight of the negative active material layer. When the negative active material layer further includes a conductive material, the negative active material layer includes 90 wt% to 98 wt% of the negative active material, 1 wt% to 5 wt% of the binder, and 1 wt% to 5 wt% of the conductive material.

The binder improves binding properties of negative active material particles with one another and with a current collector. The binder includes a non-water-soluble binder, a water-soluble binder, or a combination thereof.

The non-water-soluble binder may be selected from polyvinylchloride, carboxylated polyvinylchloride, polyvinylfluoride, an ethylene propylene copolymer, polyacrylonitrile, polystyrene, polyurethane, polytetrafluoroethylene, polyvinylidene fluoride, polyethylene, polypropylene, polyamideimide, polyimide, or a combination thereof.

The water-soluble binder may be a styrene-butadiene rubber (SBR), an acrylated styrene-butadiene rubber, an acrylonitrile-butadiene rubber, an acrylic rubber, a butyl rubber, a fluorine rubber, an ethylene oxide-containing polymer, polyvinylpyrrolidone, polyepichlorohydrine, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of 0.1 to 3 wt% based on 100 wt% of the negative active material.

The conductive material may include a carbon-based material such as natural graphite, artificial graphite, carbon black, acetylene black, ketjen black, a carbon fiber, and the like; a metal-based material of a metal powder or a metal fiber including copper, nickel, aluminum silver, and the like; a conductive polymer such as a polyphenylene derivative; or a mixture thereof.

The current collector may include at least one selected from a copper foil, a nickel foil, a stainless steel foil, a titanium foil, a nickel foam, a copper foam, a polymer substrate coated with a conductive metal, and a combination thereof.

The electrolyte includes a non-aqueous organic solvent and a lithium salt.

The non-aqueous organic solvent serves as a medium for transmitting ions taking part in the electrochemical reaction of a battery.

The non-aqueous organic solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), methyl acetate, ethyl acetate, n-propyl acetate, t-butyl acetate, methylpropionate, ethyl propionate, decanolide, mevalonolactone, caprolactone, dibutyl ether, tetraglyme, diglyme, dimethoxyethane, 2-methyltetrahydrofuran, tetrahydrofuran, cyclohexanone, ethanol, isopropyl alcohol, nitriles such as R-CN (R may be a C2 to C20 linear, branched, or cyclic hydrocarbon group and R may include a double bond, an aromatic ring, or an ether bond), and the like, amides such as dimethyl formamide, and the like, dioxolanes such as 1,3-dioxolane, and the like, sulfolanes, and the like.

The organic solvent may be used alone or in a mixture. When the organic solvent is used in a mixture, a mixing ratio may be controlled in accordance with a desirable battery performance.

In addition, the organic solvent may further include an aromatic hydrocarbon-based organic solvent. Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4 trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate or an ethylene carbonate-based compound as a cycle-life improvement additive.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the cycle-life improvement additive may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one supporting salt selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ wherein, x and y are natural numbers, for example an integer of 1 to 20), LiCl, LiI, and $LiB(C_2O_4)_2$ (lithium bis(oxalato) borate, LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a type of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

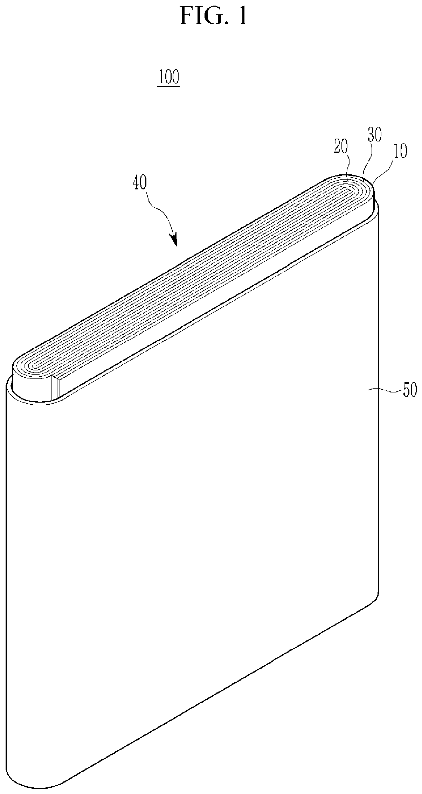

FIG. 1 is an exploded perspective view of a rechargeable lithium battery according to an embodiment. The rechargeable lithium battery according to an embodiment is illustrated as a prismatic battery but is not limited thereto and may include variously-shaped batteries such as a cylindrical battery, a pouch battery, a button-type battery, a coin-type battery, and the like.

Referring to FIG. 1, a rechargeable lithium battery 100 according to an embodiment includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

Hereinafter, examples of the present disclosure and comparative examples are described. However, the following examples are merely examples and the present invention is not limited thereto.

**Examples**

**Example 1**

(Preparation of Positive Active Material)

Lithium carbonate ($Li_2CO_3$) and $Ni_{0.55}Co_{0.25}Mn_{0.20}(OH)_2$ of nickel-based transition metal hydroxide were mixed to have a mole ratio of Li : (Ni + Co + Mn) = 1.01 : 1.00. Herein, the $Ni_{0.55}Co_{0.25}Mn_{0.20}(OH)_2$ was obtained by mixing large particle diameter nickel-based lithium transition metal hydroxide and small particle diameter nickel-based lithium transition metal hydroxide, which had the same composition but a different diameter, in a weight ratio of 8 : 2.

The first mixture was first heat-treated under a condition of increasing a temperature from 25 °C to 900 °C at 5 °C/min, maintaining it at 900 °C for 2 hours, and decreasing it to 25 °C at 5 °C/min to prepare a first fired product including large particle diameter nickel-based lithium transition metal oxide represented by $Li_{1.01}Ni_{0.55}Co_{0.25}Mn_{0.20}O_2$ and small particle diameter nickel-based lithium transition metal oxide represented by $Li_{1.01}Ni_{0.55}Co_{0.25}Mn_{0.20}O_2$. On the other hand, the first heat-treating process was performed by setting a charging height of 5 cm under an air atmosphere.

The first fired product was mixed with $Co(OH)_2$ to include 5 wt% of the nano-sized cobalt-based lithium transition metal oxide based on 100 wt% of a total weight of a positive active material as a final product. Subsequently, a secondly heat-treating was performed by increasing a temperature from 25 °C to 850 °C at 5 °C/min, maintaining it at 850 °C for 10 hours, and decreasing it at 5 °C/min down to 25 °C to prepare the positive active material including the large particle diameter nickel-based lithium transition metal oxide represented by $LiNi_{0.55}Co_{0.25}Mn_{0.20}O_2$ and the small particle diameter nickel-based lithium transition metal oxide represented by $LiNi_{0.55}Co_{0.25}Mn_{0.20}O_2$ in a weight ratio of 8 : 2 and including $LiCoO_2$ in a surface layer of the large and small particle diameter nickel-based lithium transition metal oxide. The secondly heat-treating was performed under an oxygen ($O_2$) atmosphere.

Herein, the large particle diameter nickel-based lithium transition metal hydroxide of $Ni_{0.55}Co_{0.25}Mn_{0.20}(OH)_2$ had an average particle diameter (D50) of 19.5 μm, the small particle diameter nickel-based lithium transition metal hydroxide of $Ni_{0.55}Co_{0.25}Mn_{0.20}(OH)_2$ had an average particle diameter (D50) of 2.6 μm, and the $Co(OH)_2$ had an average particle diameter (D50) of 100 nm.

(Manufacture of Positive Electrode)

94 wt% of the positive active material, 3 wt% of ketjen black, and 3 wt% of polyvinylidene fluoride were mixed in N-methyl pyrrolidone solvent to prepare positive active material slurry. The positive active material slurry was coated on an Al foil followed by drying and compressing the same to manufacture a positive electrode.

(Manufacture of Half-cell)

The manufactured positive electrode, a lithium metal counter electrode, a separator, and an electrolyte were used to manufacture a 2032-type half-cell in a conventional method. The electrolyte was prepared by dissolving 1.0M $LiPF_6$ in a mixed solvent of ethylene carbonate and dimethyl carbonate (a volume ratio of 50 : 50). The separator was $20\mu$m-thick polyethylene porous film.

**Example 2**

A positive active material, a positive electrode and a half-cell were manufactured according to the same method as Example 1 except that $Co(OH)_2$ was added so that 10 wt% of the nano-sized cobalt-based lithium transition metal oxide was included based on 100 wt% of a total weight of the positive active material of a final product to the first fired product.

**Comparative Example 1**

A positive electrode and a half-cell were manufactured according to the same method as Example 1 except that commercially available NCM622 ($LiNi_{0.6}Co_{0.2}Mn_{0.2}$, Umicore) was used as a positive active material.

**Comparative Example 2**

A positive active material, a positive electrode and a half-cell were manufactured according to the same method as Example 1 except that $Co_3O_4$ having an average particle diameter (D50) of $4.5\mu$m was used instead of $Co(OH)_2$ to the first fired product, wherein the cobalt oxide was included in an amount of 5 wt% based on 100 wt% of a total weight of the positive active material of a final product, and then, mixing the mixture at 2400 rpm for 5 minutes in a 20 L powder mixer, in the preparation of the positive active material.

**Comparative Example 3**

A positive active material, a positive electrode and a half-cell were manufactured according to the same method as Example 1 except that $Co_3O_4$ having an average particle diameter (D50) of $4.5\mu$m was used instead of $Co(OH)_2$ to the first fired product, wherein the cobalt oxide was included in an amount of 10 wt% based on 100 wt% of a total weight of the positive active material of a final product, and then, mixing the mixture at 2400 rpm for 5 minutes in a 20 L powder mixer and dry-coating it, in the preparation of the positive active material.

**Reference Example 1**

A positive active material, a positive electrode, and a half-cell were manufactured according to the same method as Example 1 except that $Co(OH)_2$ was used so that the cobalt-based lithium transition metal oxide was included in an amount of 15 wt% based on 100 wt% of a total weight of the positive active material.

**Reference Example 2** (not according to the invention)

A positive active material, a positive electrode, and a half-cell were manufactured according to the same method as Example 1 except that as for $Ni_{0.55}Co_{0.25}Mn_{0.20}(OH)_2$, the large particle diameter secondary particles alone without the small particle diameter secondary particles were used.

**Evaluation Example 1:** Measurement of Pellet Density and Mixture Density of Electrode Plate

The positive active materials and the positive electrodes manufactured in Examples 1 and 2, Comparative Examples 1 to 3, and Reference Examples 1 and 2 were used to measure pellet densities of the positive active materials and mixture densities of the electrode plates, and the results are shown in Table 1.

On the other hand, the pellet densities were measured and recorded within 3.0000 g of each positive active material (an error range ± 0.0004 g), wherein the positive active materials were maintained under 4 tons of a pressure for 30 seconds in a 13 mm-sized KBr pellet die to measure a reduced height and then, a weight per volume.

In addition, the electrode plate mixture density was measured by dividing the "electrode plate mixture weight" by the "electrode plate mixture thickness," and the "electrode plate mixture weight" was calculated by subtracting the "substrate weight per unit area" from the "electrode plate weight per unit area," and the "electrode plate mixture thickness" was obtained by subtracting the "substrate thickness" from the "electrode plate thickness."

[Table 1] (Reference Example 2 not according to the invention)

|  | Pellet density (g/cm$^3$) | Mixture density of Electrode plate (g/cm$^3$) |
| --- | --- | --- |
| Example 1 | 3.51 | 3.61 |
| Example 2 | 3.45 | 3.58 |
| Comparative Example 1 | 3.34 | 3.52 |
| Comparative Example 2 | 3.42 | 3.57 |
| Comparative Example 3 | 3.35 | 3.53 |
| Reference Example 1 | 3.43 | 3.56 |
| Reference Example 2 | 3.29 | 3.40 |

The positive active materials according to Examples 1 and 2 exhibited increased pellet density compared with those of the positive active materials according to Comparative Examples 1 to 3, and mixture densities of the electrode plates also exhibited the same result.

**Evaluation Example 2:** Cobalt-based Lithium Transition Metal Oxide Coating Layer

* EDS (Energy Dispersive x-ray Spectroscopy) Measurement Photograph

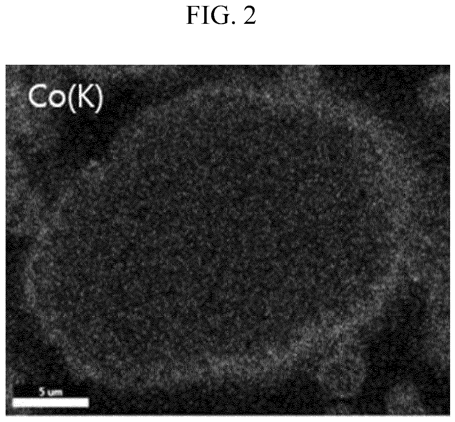

The cross section of the positive active material according to Example 1 was analyzed through EDS to confirm that Ni, Co, and Mn were well dispersed inside (in a core) and the surface (a surface layer) of the positive active material, and atomic mol% at each spot of the nickel-based lithium transition metal oxide secondary particle was measured. Among the EDS photographs, the cross section EDS photograph of the positive active material where a Co element was dispersed was measured and shown in FIG. 2.

As shown in FIG. 2, the Co element was overall dispersed inside the nickel-based lithium transition metal oxide secondary particle and particularly, present with a high density in a surface layer region corresponding to a depth of 200 nm from the surface of the secondary particle, and the reason may be that $Co(OH)_2$ and residual lithium on the surface of the nickel-based lithium transition metal oxide secondary particle reacted and formed nano-sized $LiCoO_2$.

**Differential Capacity (dQ/dV)-Voltage Charge Curve Analysis**

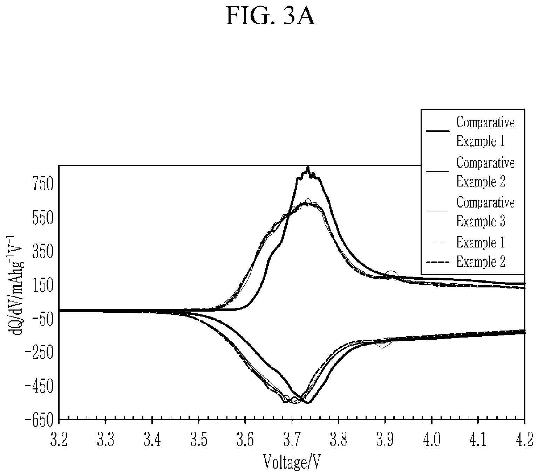

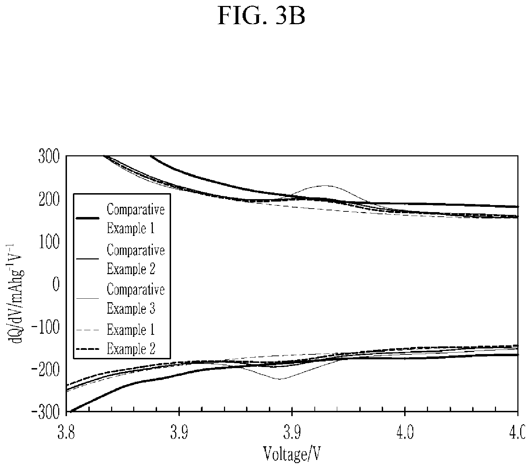

The half-cells according to Examples 1 and 2 and Comparative Examples 1 to 3 were once charged and discharged at 0.2 C and then, twice charged and discharged in the same method. FIG. 3A is a graph showing the first differential capacity (dQ/dV)-voltage charge curve, and FIG. 3B is a graph enlarging a voltage range of 3.8 to 4.0 V in the 1st differential capacity (dQ/dV)-voltage charge curve.

In FIG. 3A, a peak shown in the voltage range of 3.8 to 4.0 V means presence of LCO ($LiCoO_2$). The positive active materials according to Example 1 and Comparative Example 2 were prepared by coating a cobalt compound under a different condition on the surface of the nickel-based lithium transition metal oxide secondary particle, and when FIG. 3B was examined, Example 1 did not show the peak, but Comparative Example 2 clearly showed the peak. Accordingly, the present inventor confirmed that LCO was absorbed in the surface layer of the nickel-based lithium transition metal oxide secondary particle by using bimodal secondary particle nickel-based lithium transition metal oxide having different average particle diameters during preparation of the positive active material of Example 1 and reacting residual lithium on the surface of the nickel-based lithium transition metal oxide with nano-sized cobalt-based transition metal hydroxide. On the contrary, since the aforementioned condition in Example 1 was not satisfied during preparation of the positive active material of Comparative Example 2, even though the same amount of the cobalt compound as that of Example 1 was coated, LCO was present as an island type on the surface of the nickel-based lithium transition metal oxide secondary particle or a simple mixture with the nickel-based lithium transition metal oxide secondary particle.

In addition, as an input amount of $Co(OH)_2$ was further increased in Example 2 under the same condition as Example 1, the LCO peak little by little appeared. This result shows that as for Example 2, LCO was absorbed in the surface layer of the nickel-based lithium transition metal oxide secondary particle and simultaneously, formed on the surface of the secondary particle.

**Evaluation Example 3:** Initial Charge and Discharge Capacity and Charge and Discharge Efficiency

The half-cells according to Examples 1 and 2, Comparative Examples 1 to 3, and Reference Examples 1 and 2 were respectively once charged and discharged at 0.2 C in a voltage range of 3.0 to 4.3V, and then, charge capacity, discharge capacity, and charge and discharge efficiency thereof were obtained. These results are shown in Table 2.

[Table 2] (Reference Example 2 not according to the invention)

|  | Charge capacity (mAh/g) | Discharge capacity (mAh/g) | Charge and discharge efficiency (%) |
|---|---|---|---|
| Example 1 | 184.72 | 174.32 | 94.37 % |
| Example 2 | 184.08 | 172.94 | 93.95 % |
| Comparative Example 1 | 187.25 | 167.78 | 89.60 % |
| Comparative Example 2 | 184.65 | 170.93 | 92.57 % |
| Comparative Example 3 | 183.65 | 169.33 | 92.20 % |
| Reference Example 1 | 183.06 | 170.65 | 93.22 % |
| Reference Example 2 | 183.93 | 167.11 | 90.86 % |

As shown in Table 2, the half-cells according to Examples 1 and 2 exhibited excellent charge and discharge efficiency compared with those of Comparative Examples 1 to 3.

**Evaluation Example 4:** High Temperature Cycle-life Characteristics

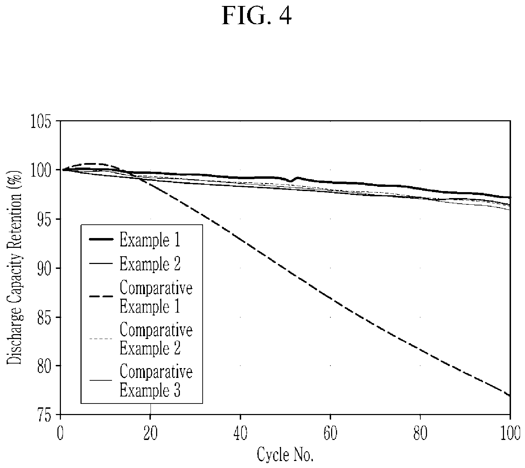

The half-cells according to Examples 1 and 2, Comparative Examples 1 to 3, and Reference Examples 1 and 2 were charged at a high temperature of 45° C under a constant current-constant voltage modeat 1.0 C (1 C = 160 mAh/g) up to 4.3 V and then at 0.05 C and discharged under a constant current modeat 1.0 C to 3.0 V, which was regarded as one charge and discharge cycle. This cycle was 100 times in total repeated, and discharge capacity thereof was measured at each cycle. Capacity retention at the 100th cycle was calculated according to Equation 1, and the results are shown in Table 3, and a high temperature cycle-life graph is shown in FIG. 4.

[Equation 1]

Capacity retention [%] at 100th cycle = [Discharge capacity at 100th cycle / Discharge capacity at 1st cycle] × 100

[Table 3] (Reference Example 2 not according to the invention)

|  | High-temperature cycle-life characteristics capacity retention [%] (45°C/100 cycles) |
|---|---|
| Example 1 | 97.20 % |
| Example 2 | 96.46 % |
| Comparative Example 1 | 76.90 % |
| Comparative Example 2 | 96.36 % |
| Comparative Example 3 | 95.90 % |
| Reference Example 1 | 95.85 % |
| Reference Example 2 | 90.07 % |

As shown in Table 3, the half-cells of Examples exhibited excellent high temperature discharge capacity retention compared with that of the half-cells of Comparative Examples. In addition, as shown in FIG. 4, the half-cells of Examples exhibited improved high temperature cycle-life characteristics compared with those of the half-cells of Comparative Examples 1 to 3.

## Claims

1. A positive active material for a rechargeable lithium battery (100), comprising

   a nickel-based lithium transition metal oxide comprising a secondary particle, the secondary particle comprising an agglomeration of a plurality of primary particles,
   the secondary particle comprising a core and a surface layer surrounding the core, and
   the surface layer comprising primary particles and a nano-sized cobalt-based lithium transition metal oxide between the primary particles,
   wherein the secondary particle comprises a small particle diameter secondary particle having an average particle diameter (D50) of 2 $\mu$m to 5 $\mu$m and a large particle diameter secondary particle having an average particle diameter of 15 $\mu$m to 20 $\mu$m,
   wherein the cobalt-based lithium transition metal oxide has an average particle diameter (D50) of less than 1 $\mu$m and is a compound represented by Chemical Formula 1:

   [Chemical Formula 1]        $Li_aCo_xM_{1-x}O_2$

   wherein, in Chemical Formula 1, $0.9 \leq a \leq 1.05$, $0.8 \leq x \leq 1.0$, and M is at least one metal element selected from Ni, Mn, Al, Cr, Fe, V, Mg, Ti, Zr, Nb, Mo, W, Cu, Zn, Ga, In, Sn, La, and Ce, and
   wherein the nickel-based lithium transition metal oxide is a compound represented by Chemical Formula 2:

   [Chemical Formula 2]        $Li_aNi_xCo_yM_zO_2$

   wherein, in Chemical Formula 2, $0.9 \leq a \leq 1.05$, $0.4 \leq x \leq 0.95$, $0.1 \leq y \leq 0.3$, $0.1 \leq z \leq 0.3$, $x + y + z = 1$, M is at least one metal element selected from Mn, Al, Cr, Fe, V, Mg, Ti, Zr, Nb, Mo, W, Cu, Zn, Ga, In, Sn, La, and Ce.

2. The positive active material of claim 1, wherein the cobalt-based lithium transition metal oxide has an average particle diameter of 100 nm to 200 nm.

3. The positive active material of claim 1, wherein a content of the cobalt-based lithium transition metal oxide is 5 wt% to 15 wt% based on a total weight of the positive active material.

4. The positive active material of any one of the preceding claims, wherein the surface layer is a region corresponding to a depth of 150 nm to 200 nm from the surface of the secondary particle.

5. The positive active material of claim 1, wherein a mixing ratio of the large particle diameter secondary particle and the small particle diameter secondary particle is a weight ratio of 90 : 10 to 50 : 50.

6. The positive active material of claim 1, wherein the small particle diameter secondary particle has a needle-shape, a sheet-shape, or a combination thereof.

7. The positive active material of claim 1, wherein the positive active material further comprises a cobalt-based lithium transition metal oxide disposed on the surface layer.

8. A method of preparing a positive active material for a rechargeable lithium battery (100) comprising the steps of:

   mixing a nickel-based transition metal hydroxide and a lithium salt to prepare a first mixture;
   first heat-treating the first mixture under a rapid temperature-increasing condition at 800 °C to 1000 °C to prepare a first fired product comprising residual lithium; and
   mixing the first fired product with a cobalt-based transition metal hydroxide and secondly heat-treating the same at 750 °C to 950 °C to obtain the positive active material of claim 1,
   wherein the nickel-based transition metal hydroxide comprises a large particle diameter secondary particle having an average particle diameter of 15 μm to 20 μm and a small particle diameter secondary particle having an average particle diameter of 2 μm to 5 μm in a weight ratio of 90 : 10 to 50 : 50,
wherein the rapid temperature-increasing condition comprises a process where a temperature is raised from 25 °C to 100 °C to a first heat-treating reaction temperature of 800 °C to 1000 °C at 4 °C/min to 6 °C/min, and
wherein the cobalt-based transition metal hydroxide has an average particle diameter of 100 nm to 200 nm.

9. The method of claim 8, wherein the cobalt-based transition metal hydroxide is $Co(OH)_2$.

10. The method of claim 8, wherein the small particle diameter secondary particle has a needle-shape, a sheet-shape, or a combination thereof.

11. A rechargeable lithium battery (100) comprising

a positive electrode (10) comprising the positive active material of claim 1;
a negative electrode (20) comprising a negative active material; and
an electrolyte.

**Patentansprüche**

1. Positives Aktivmaterial für eine wiederaufladbare Lithiumbatterie (100), umfassend

ein auf Nickel basierendes Lithium-Übergangsmetall-Oxid, das ein Sekundärpartikel umfasst, wobei das Sekundärpartikel eine Agglomeration einer Mehrzahl von Primärpartikeln umfasst,
wobei das Sekundärpartikel einen Kern und eine den Kern umgebende Oberflächenschicht umfasst und
wobei die Oberflächenschicht Primärpartikel und ein nanogroßes auf Cobalt basierendes Lithium-Übergangsmetall-Oxid zwischen den Primärpartikeln umfasst,
wobei das Sekundärpartikel ein Sekundärpartikel mit kleinem Teilchendurchmesser, das einen mittleren Teilchendurchmesser (D50) von 2 μm bis 5 μm aufweist, und ein Sekundärpartikel mit großem Teilchendurchmesser, das einen mittleren Teilchendurchmesser von 15 μm bis 20 μm aufweist, umfasst,
wobei das auf Cobalt basierende Lithium-Übergangsmetall-Oxid einen mittleren Teilchendurchmesser (D50) von kleiner als 1 μm aufweist und eine durch die chemische Formel 1 dargestellte Verbindung ist:

[Chemische Formel 1] $Li_aCo_xM_{1-x}O_2$

wobei, in der chemischen Formel 1, $0{,}9 \leq a \leq 1{,}05$, $0{,}8 \leq x \leq 1{,}0$, und M mindestens ein Metallelement, ausgewählt aus Ni, Mn, Al, Cr, Fe, V, Mg, Ti, Zr, Nb, Mo, W, Cu, Zn, Ga, In, Sn, La und Ce, ist, und
wobei das auf Nickel basierende Lithium-Übergangsmetall-Oxid eine durch die chemische Formel 2 dargestellte Verbindung ist:

[Chemische Formel 2] $Li_aNi_xCo_yM_zO_2$

wobei, in der chemischen Formel 2, $0{,}9 \leq a \leq 1{,}05$, $0{,}4 \leq x \leq 0{,}95$, $0{,}1 \leq y \leq 0{,}3$, $0{,}1 \leq z \leq 0{,}3$, $x + y + z = 1$, M mindestens ein Metallelement, ausgewählt aus Mn, Al, Cr, Fe, V, Mg, Ti, Zr, Nb, Mo, W, Cu, Zn, Ga, In, Sn, La und Ce, ist.

2. Positives Aktivmaterial nach Anspruch 1, wobei das auf Cobalt basierende Lithium-Übergangsmetall-Oxid einen mittleren Teilchendurchmesser von 100 nm bis 200 nm aufweist.

3. Positives Aktivmaterial nach Anspruch 1, wobei ein Anteil des auf Cobalt basierenden Lithium-Übergangsmetall-Oxids 5 Gew.-% bis 15 Gew.-%, bezogen auf ein Gesamtgewicht des positiven Aktivmaterials, beträgt.

4. Positives Aktivmaterial nach einem der vorangehenden Ansprüche, wobei die Oberflächenschicht ein Bereich entsprechend einer Tiefe von 150 nm bis 200 nm ab der Oberfläche des Sekundärpartikels ist.

5. Positives Aktivmaterial nach Anspruch 1, wobei ein Mischungsverhältnis des Sekundärpartikels mit großem Teilchendurchmesser und des Sekundärpartikels mit kleinem Teilchendurchmesser ein Gewichtsverhältnis von 90:10 bis 50:50 ist.

**6.** Positives Aktivmaterial nach Anspruch 1, wobei das Sekundärpartikel mit kleinem Teilchendurchmesser eine Nadelform, eine Schichtform oder eine Kombination davon aufweist.

**7.** Positives Aktivmaterial nach Anspruch 1, wobei das positive Aktivmaterial weiterhin ein auf Cobalt basierendes Lithium-Übergangsmetall-Oxid, angeordnet auf der Oberflächenschicht, umfasst.

**8.** Verfahren zur Herstellung eines positiven Aktivmaterials für eine wiederaufladbare Lithiumbatterie (100), umfassend die folgenden Schritte:

Mischen eines auf Nickel basierenden Übergangsmetallhydroxids und eines Lithiumsalzes, um ein erstes Gemisch herzustellen;
erste Wärmebehandlung des ersten Gemisches, unter einer schnellen Temperaturerhöhungsbedingung, bei 800 °C bis 1000 °C, um ein erstes gebranntes Produkt mit verbleibendem Lithium herzustellen; und
Mischen des ersten gebrannten Produkts mit einem auf Cobalt basierenden Übergangsmetallhydroxid und zweite Wärmebehandlung desselben bei 750 °C bis 950 °C, um das positive Aktivmaterial nach Anspruch 1 zu erhalten,
wobei das auf Nickel basierende Übergangsmetallhydroxid ein Sekundärpartikel mit großem Teilchendurchmesser, das einen mittleren Teilchendurchmesser von 15 $\mu$m bis 20 $\mu$m aufweist, und ein Sekundärpartikel mit kleinem Teilchendurchmesser, das einen mittleren Teilchendurchmesser von 2 $\mu$m bis 5 $\mu$m aufweist, in einem Gewichtsverhältnis von 90:10 bis 50:50 umfasst,
wobei die schnelle Temperaturerhöhungsbedingung einen Prozess umfasst, bei der eine Temperatur von 25 °C bis 100 °C auf eine erste Wärmebehandlungsreaktionstemperatur von 800 °C bis 1000 °C mit 4 °C/min bis 6 °C/min erhöht wird, und
wobei das auf Cobalt basierende Übergangsmetallhydroxid einen mittleren Teilchendurchmesser von 100 nm bis 200 nm aufweist.

**9.** Verfahren nach Anspruch 8, wobei das auf Cobalt basierende Übergangsmetallhydroxid Co(OH)$_2$ ist.

**10.** Verfahren nach Anspruch 8, wobei das Sekundärpartikel mit kleinem Teilchendurchmesser eine Nadelform, eine Schichtform oder eine Kombination davon aufweist.

**11.** Wiederaufladbare Lithiumbatterie (100), umfassend

eine positive Elektrode (10), umfassend das positive Aktivmaterial nach Anspruch 1;
eine negative Elektrode (20), umfassend ein negatives Aktivmaterial; und
einen Elektrolyten.

**Revendications**

**1.** Matériau actif positif pour une batterie au lithium rechargeable (100), comprenant

un oxyde de métal de transition au lithium à base de nickel comprenant une particule secondaire, la particule secondaire comprenant une agglomération d'une pluralité de particules primaires,
la particule secondaire comprenant un noyau et une couche superficielle entourant le noyau, et
la couche superficielle comprenant des particules primaires et un oxyde de métal de transition au lithium à base de cobalt nanométrique entre les particules primaires,
dans lequel la particule secondaire comprend une particule secondaire de petit diamètre de particule présentant un diamètre de particule moyen (D50) de 2 $\mu$m à 5 $\mu$m et une particule secondaire de grand diamètre de particule présentant un diamètre de particule moyen de 15 $\mu$m à 20 $\mu$m,
dans lequel l'oxyde de métal de transition au lithium à base de cobalt présente un diamètre de particule moyen (D50) inférieur à 1 $\mu$m et est un composé représenté par la formule chimique 1 :

[formule chimique 1] $\qquad$ Li$_a$CO$_x$M$_{1-x}$O$_2$

dans lequel, dans la formule chimique 1, $0,9 \leq a \leq 1,05$, $0,8 \leq x \leq 1,0$, et M est au moins un élément métallique choisi parmi Ni, Mn, Al, Cr, Fe, V, Mg, Ti, Zr, Nb, Mo, W, Cu, Zn, Ga, In, Sn, La, et Ce, et
dans lequel l'oxyde de métal de transition au lithium à base de nickel est un composé représenté par la formule chimique 2 :

[formule chimique 2] $Li_aNi_xCo_yM_zO_2$

dans lequel, dans la formule chimique 2, $0,9 \leq a \leq 1,05$, $0,4 \leq x \leq 0,95$, $0,1 \leq y \leq 0,3$, $0,1 \leq z \leq 0,3$, $x + y + z = 1$, M est au moins un élément métallique choisi parmi Mn, Al, Cr, Fe, V, Mg, Ti, Zr, Nb, Mo, W, Cu, Zn, Ga, In, Sn, La, et Ce.

2. Matériau actif positif selon la revendication 1, dans lequel l'oxyde de métal de transition au lithium à base de cobalt présente un diamètre de particule moyen de 100 nm à 200 nm.

3. Matériau actif positif selon la revendication 1, dans lequel une teneur de l'oxyde de métal de transition au lithium à base de cobalt est 5 % en poids à 15 % en poids sur la base d'un poids total du matériau actif positif.

4. Matériau actif positif selon l'une quelconque des revendications précédentes, dans lequel la couche superficielle est une région correspondant à une profondeur de 150 nm à 200 nm à partir de la surface de la particule secondaire.

5. Matériau actif positif selon la revendication 1, dans lequel un rapport de mélange de la particule secondaire de grand diamètre de particule et de la particule secondaire de petit diamètre de particule est un rapport pondéral de 90:10 à 50:50.

6. Matériau actif positif selon la revendication 1, dans lequel la particule secondaire de petit diamètre de particule présente une forme d'aiguille, une forme de feuille, ou une combinaison de celles-ci.

7. Matériau actif positif selon la revendication 1, dans lequel le matériau actif positif comprend en outre un oxyde de métal de transition au lithium à base de cobalt disposé sur la couche superficielle.

8. Procédé de préparation d'un matériau actif positif pour une batterie au lithium rechargeable (100) comprenant les étapes consistant à :

mélanger un hydroxyde de métal de transition à base de nickel et un sel de lithium pour préparer un premier mélange ;
réaliser un premier traitement thermique du premier mélange dans une condition d'augmentation de température rapide à 800 °C à 1000 °C pour préparer un premier produit cuit comprenant du lithium résiduel ; et
mélanger le premier produit cuit avec un hydroxyde de métal de transition à base de cobalt et ensuite traiter thermique celui-ci à 750 °C à 950 °C pour obtenir le matériau actif positif selon la revendication 1,
dans lequel l'hydroxyde de métal de transition à base de nickel comprend une particule secondaire de grand diamètre de particule présentant un diamètre de particule moyen de 15 $\mu$m à 20 $\mu$m et une particule secondaire de petit diamètre de particule présentant un diamètre de particule moyen de 2 $\mu$m à 5 $\mu$m dans un rapport pondéral de 90:10 à 50:50,
dans lequel la condition d'augmentation de température rapide comprend un processus où une température est élevée de 25 °C à 100 °C à une température de réaction de premier traitement thermique de 800 °C à 1000 °C à 4 °C/min à 6 °C/min, et
dans lequel l'hydroxyde de métal de transition à base de cobalt présente un diamètre de particule moyen de 100 nm à 200 nm.

9. Procédé selon la revendication 8, dans lequel l'hydroxyde de métal de transition à base de cobalt est $Co(OH)_2$.

10. Procédé selon la revendication 8, dans lequel la particule secondaire de petit diamètre de particule présente une forme d'aiguille, une forme de feuille, ou une combinaison de celles-ci.

11. Batterie au lithium rechargeable (100) comprenant

une électrode positive (10) comprenant le matériau actif positif selon la revendication 1 ;
une électrode négative (20) comprenant un matériau actif négatif ; et
un électrolyte.

# FIG. 1

<u>100</u>

FIG. 2

# FIG. 3A

FIG. 3B

FIG. 4

FIG. 5

**REFERENCES CITED IN THE DESCRIPTION**

**Patent documents cited in the description**

• EP 3272710 A1